# EUROPÄISCHE PATENTSCHRIFT

(11) **EP 1 924 624 B1**
(45) Veröffentlichungstag und Bekanntmachung des Hinweises auf die Patenterteilung: **24.12.2008**
(21) Anmeldenummer: 06763033.5
(22) Anmeldetag: 23.08.2006
(51) Int. Cl.: C08G 18/61, C08G 77/26, C09D 183/04, C09J 183/00, C09J 175/04

(54) **WÄSSRIGE 2K-PUR SYSTEME ENTHALTEND HYDROXY-FUNKTIONELLE POLYDIMETHYLSILOXANE**
AQUEOUS TWO-COMPONENT POLYURETHANE SYSTEMS CONTAINING HYDROXY-FUNCTIONAL POLYDIMETHYLSILOXANES
SYSTEMES POLYURETHANE AQUEUX A DEUX CONSTITUANTS CONTENANT DES POLYDIMETHYLSILOXANES A FONCTION HYDROXY

(30) Priorität: 03.09.2005 DE 102005041951
(43) Veröffentlichungstag der Anmeldung: 28.05.2008
(73) Patentinhaber: Bayer MaterialScience AG, 51368 Leverkusen (DE)
(72) Erfinder: NIESTEN, Meike, 51061 Köln (DE); TILLACK, Jörg, 51427 Bergisch Gladbach (DE); STRUWE, Michael, 40764 Langenfeld (DE)
(86) Internationale Anmeldenummer: PCT/EP2006/008277
(87) Internationale Veröffentlichungsnummer: WO 2007/025670

(56) Entgegenhaltungen:
- US-A- 5 807 956
- US-A- 5 883 276
- US-B1- 6 475 568

## Beschreibung

Die Erfindung betrifft wässrige 2K-Systeme enthaltend hydroxyfunktionelle Polydimethylsiloxane.

Zweikomponenten-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente, enthalten, sind seit langem bekannt. Sie eignen sich zur Herstellung von hochwertigen Überzügen, die hart, elastisch, abrieb- und lösungsmittelbeständig eingestellt werden können.

Wegen der immer strenger werdenden Gesetzgebung bezüglich erlaubter Anteile flüchtiger organischer Komponenten beispielsweise in Beschichtungsmitteln sind wässrige Systeme zunehmend gefragter. Wässrige Zweikomponenten-Beschichtungsmittel sind seit Jahren bekannt und beispielsweise in EP-A 0 358979 beschrieben.

Die Modifizierung von 2K-PUR Lacksysteme mit Polydimethylsiloxanen (PDMS) ist bekannt. Durch die hohe Oberflächenspannung von PDMS werden spezielle Eigenschaften erzeugt wie gute Oberflächenbenetzung, Slip-Beständigkeit and eine easy-to-clean Oberfläche (Reusmann in Farbe und Lack, 105, Jahrgang 8/99, Seite 40-47, Adams in Paintindia, October 1996, Seite 31-37).

Um einen guten PDMS Einbau zu gewährleisten und Migration des PDMS weitestgehend zu vermeiden, werden oft organofunktionelle PDMS-Typen wie alkylenamin- oder alkylenhydroxylfunktionelle PDMS-Derivate verwendet. Solche Lacksysteme werden z.B. in WO91/18954, EP-A 0 329 260 oder US 4 774 278 beschrieben.

Die aminfunktionellen PDMS-Typen haben allerdings den Nachteil, dass die Topfzeit von darauf basierten Polyurethansystemen aufgrund der hohen Neigung zur Harnstoffbildung extrem verkürzt ist.

Die bekannten hydroxylfunktionellen PDMS-Typen führen zwar zu verbesserten Topfzeiten, jedoch weisen sie in der Regel Inkompatibilitäten mit der Polyisocyanatkomponente auf, so dass keine homogenen Filme hergestellt werden können und die Vernetzung nur unvollständig stattfindet. Dadurch liegt freies ungebundenes PDMS im Lack vor, welches mit der Zeit aus der Beschichtung migriert und zu Eigenschaftsverschlechterung der Beschichtung führt.

US 6 475 568 beschreibt den Einsatz von Copolyolen erhalten durch Umsatz von epoxyfunktionellen PDMS-Oligomeren und primären oder sekundären Aminen als Additiv für Kosmetikprodukte oder Textilweichmacher. Die Verwendbarkeit als 2K-PUR Bindemittel für Lacke und Beschichtungen wurde nicht beschrieben.

WO 2004/022619 beschreibt den Einsatz von Kettenverlängerern für Polyharnstoffsysteme, die durch Umsatz von epoxyfunktionellem PDMS mit Aminen erhalten werden. Die Umsetzung von epoxyfunktionellen PDMS mit Hydroxylaminen zu entsprechend OH-funktionellen Verbindungen wurde nicht beschrieben.

Es wurde nun gefunden, dass sich die Nachteile des Standes der Technik umgangen werden können, wenn man spezielle hydroxylgruppenhaltige Polydimethylsiloxane als Teil der NCOreaktiven Bindemittelkomponente in Kombination mit speziellen Polyacrylatpolyolen einsetzt.

Gegenstand der Erfindung sind wässrige Zusammensetzungen enthaltend
A) hydroxylgruppenhaltige Polydimethylsiloxane mit zahlenmittleren Molekulargewichten von 400 bis 3000 g/mol und einer mittleren OH-Funktionalität von ≥ 1,8, dadurch gekennzeichnet, dass diese wenigstens eine Struktureinheit der Formel (I) aufweisen: 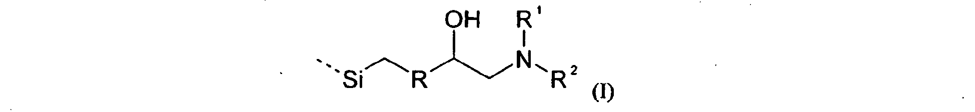 wobei
   - R: ein aliphatischer gegebenenfalls verzweigter C₁- bis C₂₀-Rest ist,
   - R¹: ein gegebenenfalls verzweigter Hydroxyalkylrest mit 2 bis 10 Kohlenstoffatomen ist und
   - R²: entweder Wasserstoff ist oder der Definition des Restes R¹ entspricht
   und
B) hydroxylgruppen-, sowie sulfonat- und/oder carboxylatgruppenaufweisende Polymerisate mit einem zahlenmittleren Molekulargewicht Mₙ von 500 bis 50 000 g/mol, einer Hydroxylzahl von 16,5 bis 264 mg KOH/g Festharz, einer Säurezahl von 0 bis 150 mg KOH/g Festharz und einem Gehalt an chemisch gebundenen Carboxylat- und/oder Sulfonatgruppen von 5 bis 41-7 Milliäquivalenten pro 100 g Feststoff des Polymerisats und
C) Polyisocyanate.

Bevorzugt werden die Komponenten A) und B) so eingesetzt, dass bezogen auf die Gesamtmenge von A) und B) 0,01 bis 20 Gew.% Komponente A) und 80 bis 99,99 Gew.% Komponente B), besonders bevorzugt 0,1 bis 10 Gew.-% A) und 90 bis 99,90 Gew.-% B) vorliegen.

Bevorzugt beträgt das Verhältnis von NCO-Gruppen zu OH-funktionellen Verbindungen der Komponenten A) bis C) 0,5 : 1 bis 5,0 : 1, besonders bevorzugt 0,8 : 1 bis 2 : 1.

Bevorzugt haben die in A) eingesetzten hydroxylgruppenhaltigen Polydimethylsiloxane eine mittlere OH-Funktionalität von 1,9 bis 6.

Solche einzusetzenden hydroxylgruppenhaltigen Polydimethylsiloxane sind erhältlich, indem entsprechende epoxyfunktionelle Polydimethylsiloxane mit Hydroxylaminen vorzugsweise in einem stöchiometrischen Verhältnis von Epoxygruppe zu NH-Funktion umgesetzt werden.

Die dazu eingesetzten epoxyfunktionellen Polydimethylsiloxane weisen bevorzugt 1 bis 4 Epoxygruppen pro Molekül auf. Ferner haben sie zahlenmittlere Molekulargewichte von bevorzugt 150 bis 2800 g/mol, besonders bevorzugt 250 bis 2000 g/mol.

Bevorzugte epoxyfunktionelle Polydimethylsiloxane sind α,ω-Epoxy-dimethylsiloxane entsprechend der Formel (II) mit den vorstehenden Molekulargewichten und im Mittel 2 Epoxyfunktionen pro Molekül. Solche Produkte sind beispielsweise von GE Bayer Silicones, Leverkusen, Deutschland, Tego, Essen, Deutschland oder Wacker, München, Deutschland kommerziell erhältlich 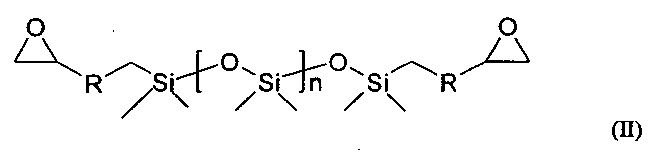 wobei
- R: ein gegebenenfalls verzweigter aliphatischer C₁- bis C₁₀-Rest ist und
- n: eine ganze Zahl von 1 bis 25 ist.

Die eingesetzten Hydroxylamine entsprechen der Formel (III) 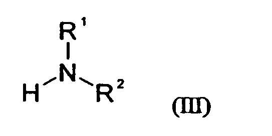 wobei
- R¹: ein gegebenenfalls verzweigter Hydroxyalkylrest mit 2 bis 10 Kohlenstoffatomen ist und
- R²: entweder Wasserstoff ist oder der Definition des Restes R¹ entspricht.

Bevorzugte Hydroxylamine sind Ethanolamin, Propanolamin, Diethanolamin und Dipropanolamin. Besonders bevorzugt ist Diethanolamin.

Zur Herstellung der erfindungswesentlichen modifizierten Siloxane der Komponente A) wird das epoxyfunktionelle Siloxan der vorstehend genannten Art gegebenenfalls in einem Lösemittel vorgelegt und dann mit der erforderlichen Menge des Hydroxylamins oder einer Mischung mehrerer Hydroxylamine umgesetzt. Die Reaktionstemperatur beträgt typischerweise 20 bis 150 °C und wird solange geführt, bis keine freien Epoxygruppen mehr nachweisbar sind.

Bevorzugt haben die wie vorstehend beschrieben erhältlichen hydroxylgruppenhaltigen Polydimethylsiloxane der Komponente A) zahlenmittlere Molekulargewichte von 250 bis 2250 g/mol.

Bei der Komponente B) handelt es sich um Polymerisate, die Hydroxylgruppen und Sulfonat- und/oder Carboxylatgruppen enthalten. Der Ausdruck "Sulfonat- und/oder Carboxylatgruppen" umfasst sowohl die deprotonierten anionischen Sulfonat- bzw. Carboxylatgruppen als auch die entsprechenden Sulfonsäure- und Carbonsäurefunktionen.

Diese Polymerisate sind durch radikalische Polymerisation geeigneter olefinisch ungesättigter Monomere erhältlich und haben ein nach der Gelpermeationschromatographie bestimmtes zahlenmittleres Molekulargewicht Mₙ von 500 bis 50. 000 g/mol, bevorzugt 1.000 bis 10.000 g/mol, eine Hydroxylzahl von 16,5 bis 264, bevorzugt 33 bis 165 mg KOH/g Festharz, eine Säurezahl (bezogen auf die nicht neutralisieren Sulfonsäure- und/oder Carboxylgruppen) von 0 bis 150, bevorzugt 0 bis 100 mg KOH/g Festharz und einen Gehalt an Sulfonat- und/oder Carboxylatgruppen von 5 bis 417, bevorzugt 24 bis 278 Milliäquivalenten pro 100 g Feststoff:

Bevorzugt weisen die Polymerisate zur anionischen Hydrophilierung nur Carboxylatgruppen auf.

Die Polymerisatharze B) kommen bei der Herstellung der erfindungsgemäßen wässrigen Zusammensetzungen im allgemeinen in Form von 10 bis 50, bevorzugt 20 bis 40 Gew.-%igen wässrigen Lösungen und/oder Dispersionen zum Einsatz, die im allgemeinen eine Viskosität von 10 bis 10⁵, vorzugsweise 100 bis 10. 000 mPa.s/23° C und pH-Werte von 5 bis 10, vorzugsweise 6 bis 9 aufweisen.

In Abhängigkeit vom Molekulargewicht der Polymerisate und ihrem Gehalt an anionischen Gruppen bzw. an freien Säuregruppen, insbesondere Carboxylgruppen handelt es sich bei den wässrigen, die Polymerisate enthaltenden Systemen um echte Dispersionen, kolloiddisperse oder molekulardisperse Dispersionen, im allgemeinen jedoch um so genannte "Teildispersionen", d.h. um wässrige Systeme, die zum Teil molekulardispers und zum anderen Teil kolloiddispers sind.

Die Herstellung der hydroxylgruppenaufweisenden Polymerisate erfolgt durch an sich bekannte Copolymerisation von olefinisch ungesättigten Monomeren, wobei als Monomere sowohl hydroxylgruppenaufweisende Monomere als auch säuregruppenaufweisende Monomere, im allgemeinen zusammen mit weiteren Monomeren copolymerisiert werden, wonach die vorliegenden Säuregruppen zumindest teilweise neutralisiert werden.

Die Mitverwendung der Säuregruppen aufweisenden Monomeren erfolgt zwecks Einbaus von Carboxyl- und/oder Sulfonsäuregruppen in die Copolymerisate, die aufgrund ihrer Hydrophilie die Wasserlöslichkeit bzw. -dispergierbarkeit der Polymerisate, insbesondere nach erfolgter zumindest partieller Neutralisation der Säuregruppen gewährleisten. Die Menge der mitverwendeten "sauren" Comonomere und der Neutralisationsgrad der zunächst erhaltenen "sauren" Polymerisate entspricht den oben gemachten Angaben bezüglich der Säurezahl und des Gehalts an Sulfonat- und/oder Carboxylatgruppen.

Im Allgemeinen kommen die "sauren" Comonomeren in Mengen von 1 bis 30, vorzugsweise 5 bis 20 Gew.%, bezogen auf das Gesamtgewicht der eingesetzten Monomeren zum Einsatz.

Geeignete "saure" Comonomere sind im Prinzip alle olefinisch ungesättigten, polymerisierbaren Verbindungen, die mindestens eine Carboxyl- und/oder Sulfonsäuregruppe aufweisen wie beispielsweise olefinisch ungesättigte Mono- oder Dicarbonsäuren des Molekulargewichtsbereichs 72 bis 207 g/mol wie Acrylsäure, Methacrylsäure, Maleinsäure, Itaconsäure oder Sulfonsäuregruppen aufweisende olefinisch ungesättigte Verbindungen wie beispielsweise 2-Acrylamido-2-methylpropansulfonsäure oder beliebige Gemische derartiger olefinisch ungesättigter Säuren.

Die Hydroxylgruppen aufweisenden Monomeren werden in solchen Mengen mitverwendet, dass die obengenannten Hydroxylzahlen der Polymerisate resultieren, die im übrigen im allgemeinen einem Hydroxylgruppengehalt der Polymerisate von 0,5 bis 8, vorzugsweise 1 bis 5 Gew.-% entsprechen.

Im allgemeinen werden die hydroxyfunktionellen Comonomeren im Mengen von 3 bis 75, vorzugsweise 6 bis 47 Gew.%, bezogen auf das Gesamtgewicht der eingesetzten Monomeren mitverwendet.

Außerdem muss selbstverständlich darauf geachtet werden, dass im Rahmen der gemachten Angaben die Menge der hydroxyfunktionellen Monomeren so gewählt wird, dass Copolymerisate entstehen, die im statistischen Mittel pro Molekül mindestens zwei Hydroxylgruppen aufweisen.

Bevorzugte hydroxylgruppenaufweisende Monomere sind Hydroxyalkylester der Acrylsäure oder Methacrylsäure mit vorzugsweise 2 bis 4 Kohlenstoffatomen im Alkylrest wie 2-Hydroxyethylacrylat oder - methacrylat, 2- oder 3- Hydroxypropylacrylat oder -methacrylat, sowie die isomeren Hydroxybutylacrylate oder -methacrylate oder beliebige Gemische derartiger Monomere.

Als dritte Gruppe von olefinisch ungesättigten Monomeren, die bei der Herstellung der Copolymerisate im allgemeinen mitverwendet werden, sind solche olefinisch ungesättigten Verbindungen zu nennen, die weder saure Gruppen noch Hydroxylgruppen aufweisen. Hierzu gehören beispielsweise Ester der Acrylsäure bzw. der Methacrylsäure mit 1 bis 18, vorzugsweise 1 bis 8 Kohlenstoffatomen im Alkoholrest wie Methylacrylat, Ethylacrylat, Isopropylacrylat, n-Propylacrylat, n-Butylacrylat, 2-Ethylhexylacrylat, n- Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere. Auch Epoxidgruppen aufweisende Comonomere wie z.B. Glycidylacrylat oder -methacrylat oder Monomere wie N-Methoxymethylacrylamid oder -methacrylamid können in geringen Mengen mitverwendet werden.

Die Monomeren der letztgenannten dritten Gruppe ohne Säure- und Hydroxylgruppen werden im allgemeinen in Mengen von bis zu 90 Gew.%, bevorzugt 40 bis 80 Gew.%, bezogen auf das Gesamtgewicht der eingesetzten Monomeren mitverwendet.

Die Herstellung der Polymerisate kann durch Polymerisation nach üblichen Verfahren durchgeführt werden. Vorzugsweise erfolgt die Herstellung der Polymerisate in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Als Lösungsmittel kommen beispielsweise Aromaten, wie Benzol, Toluol, Xylol, Chlorbenzol, Ester wie Ethylacetat, Butylacetat; Methylglykolacetat, Ethylglykolacetat, Methoxypropylacetat, Ether wie Butylglykol, Tetrahydrofuran, Dioxan, Ethylglykolether, Ketone wie Aceton, Methylethylketon, halogenhaltige Lösemittel wie Methylenchlorid oder Trichlormonofluorethan in Betracht.

Die durch Radikale initiierte Polymerisation kann durch Initiatoren ausgelöst werden, deren Halbwertzeiten des Radikalzerfalls bei 80 bis 180°C zwischen 0,01 und 400 min. liegen. Im allgemeinen erfolgt die Copolymerisationsreaktion im genannten Temperaturbereich, vorzugsweise zwischen 100 und 160°C, unter einem Druck von 10³ bis 2 x 10⁴ mbar, wobei sich die genaue Polymerisationstemperatur nach der Art des Initiators richtet. Die Initiatoren werden in Mengen von 0,05 bis 6 Gew.%, bezogen auf die Gesamtmenge an Monomeren, eingesetzt.

Geeignete Initiatoren sind z.B. aliphatische Azoverbindungen wie Azoisobutyronitril sowie Peroxide wie z. B. Dibenzoylperoxid, t- Butylperpivalat, t-Butyl-per-2-ethylhexanoat, t- Butylperbenzoat, t- Butylhydroperoxid, Di-t-butylperoxid, Cumolhydroperoxid sowie Dicyclohexyl- und Dibenzylperoxydicarbonat.

Zur Regelung des Molekulargewichts der Polymeren können übliche Regler eingesetzt werden wie n-Dodecylmercaptan, Diisopropylxanthogendisulfid, Di(methylentrimethylolpropan)xanthogendisulfid und Thioglykol. Sie werden in Mengen von höchstens 3 Gew.% bezogen auf das Monomerengemisch zugegeben.

Nach beendeter Polymerisation werden die Copolymerisate in eine wäßrige Lösung bzw. Dispersion überführt. Hierzu wird die organische Polymerlösung in eine meist vorgewärmte Wasserphase eingeleitet und gleichzeitig das organische Lösemittel destillativ, im allgemeinen unter Anlegen eines Vakuums, entfernt. Um eine gute Wasserlöslichkeit bzw. -dispergierbarkeit zu erreichen, muss der Wasserphase im allgemeinen ein Neutralisationsmittel, wie z.B. anorganische Basen, Ammoniak oder Amine, zugesetzt werden. Als anorganische Basen können beispielsweise Natriumhydroxid, Kaliumhydroxid, als Amine neben Ammoniak Trimethylamin, Triethylamin, Dimethylethanolamin eingesetzt werden. Die Neutralisationsmittel können sowohl im stöchiometrischen Unter- als auch Überschuss eingesetzt werden, wobei die obengenannten Gehalte an Sulfonat- und/oder Carboxylatgruppen, insbesondere an Carboxylatgruppen und die obengenannten Säurezahlen resultieren. Im Falle einer völligen Neutralisation der vorliegenden sauren Gruppen resultiert dann die Säurezahl Null, während der Gehalt an Sulfonat- und/oder Carboxylatgruppen dem ursprünglichen Gehalt an Sulfonsäuregruppen bzw. Carboxylgruppen entspricht. Bei einer Teilneutralisation entsprechen die Gehalte an Sulfonat- und/oder Carboxylatgruppen der Menge des eingesetzten Neutralisationsmittels. Insbesondere bei Verwendung eines stöchiometrischen Überschusses an Neutralisationsmittel ist jedoch darauf zu achten, dass durch den Polyelektrolytcharakter der Polymeren eine deutliche Viskositätszunahme erfolgen kann. Die erhaltenen wässrigen Lösungen bzw. Dispersionen besitzen die obengenannten Konzentrationen und Viskositäten und weisen im allgemeinen einen Gehalt an Restlösungsmittel von unter 5 Gew.-%, vorzugsweise von unter 2 Gew.-% auf. Die praktisch restlose Entfernung auch von höher als Wasser siedenden Lösungsmitteln ist durch azeotrope Destillation möglich.

Geeignete Polyisocyanate der Komponente C) sind organische Polyisocyanate mit einer mittleren NCO-Funktionalität von mindestens 2 und einem Molekulargewicht von mindestens 140 g/mol. Gut geeignet sind vor allem (i) unmodifizierte organische Polyisocyanate des zahlenmittleren Molekulargewichtsbereichs von 140 bis 300 g/mol, (ii) Lackpolyisocyanate eines zahlenmittleren Molekulargewichts von 300 bis 1000 g/mol sowie (iii) urethangruppenaufweisende NCO-Prepolymere mit zahlenmittleren Molekulargewichten > 1000 g/mol oder Gemische aus (i) bis (iii).

Beispiele für Polyisocyanate der Gruppe (i) sind 1,4-Diisocyanatobutan, 1,6-Diisocyanatohexan (HDl), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanato-dodecan, Cyclohexan-1,3- und -1,4-diisocyanat, Xylylendiisocyanat-Isomere, Triisocyanatononan (TIN), 2,4-Diisocyanatotoluol oder dessen Gemische mit 2,6-Diisocyanatotoluol mit bevorzugt, bezogen auf Gemische, bis zu 35 Gew.% 2,6-Diisocyanatotoluol, 2,2'-, 2,4'-, 4,4'-Diisocyanatodiphenylmethan oder technische Polyisocyanatgemische der Diphenylmethanreihe oder beliebige Gemische der genannten Isocyanate. Bevorzugt kommen dabei die Polyisocyanate der Diphenylmethanreihe, besonders bevorzugt als Isomerengemische, zum Einsatz.

Polyisocyanate der Gruppe (ii) sind die an sich bekannten Lackpolyisocyanate. Unter dem Begriff "Lackpolyisocyanate" sind im Rahmen der Erfindung Verbindungen oder Gemische von Verbindungen zu verstehen, die durch an sich bekannte Oligomerisierungsreaktion von einfachen Diisocyanaten der unter (i) beispielhaft genannten Art erhalten werden. Geeignete Oligomerisierungsreaktionen sind z.B. die Carbodiimidisierung, Dimerisierung, Trimerisierung, Biuretisierung, Hamstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab.

Bevorzugt handelt es sich bei den "Lackpolyisocyanaten" (ii) um Biuretpolyisocyanate, isocyanuratgruppenaufweisende Polyisocyanate, isocyanurat- und uretdiongruppenaufweisende Polyisocyanatgemische, Urethan- und/oder allophanatgruppenaufweisende Polyisocyanate oder um isocyanurat- und allophanatgruppenaufweisende Polyisocyanatgemische auf Basis einfacher Diisocyanate.

Die Herstellung von derartigen Lackpolyisocyanaten ist bekannt und beispielsweise in der DE-A 1 595 273, DE-A 3 700 209 und DE-A 3 900 053 oder in der EP-A-0 330 966, EP-A 0 259 233, EP-A- 0 377 177, EP-A-0 496 208, EP-A-0 524 501 oder US-A 4 385 171 beschrieben.

Polyisocyanate der Gruppe (iii) sind die an sich bekannten Isocyanatgruppen aufweisenden Prepolymere auf Basis von einfachen Diisocyanaten der oben beispielhaft genannten Art und/oder auf Basis von Lackpolyisocyanaten (ii) einerseits und organischen Polyhydroxyverbindungen eines über 300 g/mol liegenden zahlenmittleren Molekulargewichts andererseits. Während es sich bei den urethangruppenaufweisenden Lackpolyisocyanaten der Gruppe (ii) um Derivate von niedermolekularen Polyolen des zahlenmittleren Molekulargewichtsbereichs von 62 bis 300 g/mol handelt, geeignete Polyole sind beispielsweise Ethylenglykol, Propylenglykol, Trimethylolpropan, Glycerin oder Gemische dieser Alkohole, werden zur Herstellung der NCO-Prepolymeren der Gruppe (iii) Polyhydroxylverbindungen mit zahlenmittleren Molekulargewichten von über 300 g/mol, bevorzugt über 500 g/mol, besonders bevorzugt von 500 bis 8000 g/mol eingesetzt. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpolyolen und Gemischen aus derartigen Polyolen ausgewählt sind.

Bei der Herstellung der NCO-Prepolymere (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren, die ebenfalls als erfindungsgemäße Ausgangskomponente (C) geeignet sind.

Zur Herstellung der NCO-Prepolymeren (iii) oder deren Gemische mit den Lackpolyisocyanaten (ii) werden Diisocyanate (i) der oben beispielhaft genannten Art oder Lackpolyisocyanate der unter (ii) beispielhaft genannten Art mit den höhermolekularen Hydroxylverbindungen oder deren Gemischen mit niedermolekularen Polyhydroxylverbindungen der beispielhaft genannten Art unter Einhaltung eines NCO/OH Äquivalentverhältnisses von 1,1:1 bis 40:1, bevorzugt 2:1 bis 25:1 unter Urethanbildung umgesetzt. Gegebenenfalls kann bei Verwendung eines Überschusses an destillierbarem Ausgangsdiisocyanat dieser im Anschluss an die Umsetzung destillativ entfernt werden, so dass monomerenfreie NCO-Prepolymere, d.h. Gemische aus Ausgangsdiisocyanaten (i) und echten NCO-Prepolymeren (iii) vorliegen, die ebenfalls als Komponente (A) eingesetzt werden können.

Niedrigviskose, hydrophilierte Polyisocyanate mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate können auch eingesetzt werden.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985, S. 3, Z 55 - S. 4 Z. 5 beschrieben. Gut geeignet sind auch die in der EP-A-959087, S. 3 Z. 39. - 51 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21, S. 2 Z. 66 - S. 3 Z. 5, beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE 10024624, S. 3 Z. 13 - 33 beschrieben sind. Ebenso möglich ist die Hydrophilierung durch Zusatz handelsüblicher Emulgatoren.

Bevorzugte hydrophile Polyisocyanate C) sind sulfonatgruppenhaltigen Polyisocyanate. Solche sulfonatgruppenhaltigen Polyisocyanate haben bevorzugt eine mittlere Isocyanatfunktionalität von mindestens 1,8, einem Gehalt an Isocyanatgruppen (berechnet als NCO; Molekulargewicht = 42) von 4,0 bis 26,0 Gew.%, einem Gehalt an gebundenen Sulfonsäure und Sulfonatgruppen (berechnet als SO₃⁻; Molekulargewicht = 80) von 0,1 bis 7,7 Gew.% und einem Gehalt an innerhalb von Polyetherketten gebundenen Ethylenoxideinheiten (berechnet als C₂H₂O; Molekulargewicht = 44) von 0 bis 19,5 Gew.-% bezogen auf den zugrunde liegenden Polyether.

Falls die vorstehend beschriebenen Polyisocyanate Polyetherketten aufweisen, enthalten diese bevorzugt im statistischen Mittel 5 bis 35 Ethylenoxideinheiten.

Die Sulfonatgruppen haben dabei als Gegenion bevorzugt ein aus tertiären Aminen durch Protonierung gebildetes Ammoniumion. Das Verhältnis der Summe aus Sulfonsäuregruppen und Sulfonatgruppen zur Summe aus tertiärem Amin und dem davon abgeleiteten protonierten Ammoniumion beträgt typischerweise 0,2 bis 2,0.

Beispiele der tertiäre Amine sind Monoamine, wie Trimethylamin, Triethylamin, Tripropylamin, Tributylamin, Dimethylcyclohexylamin, N-Methylmorpholin, N-Ethylmorpholin, N-Methylpiperidin, N-Ethylpiperidin, oder um tertiäre Diamine, wie z.B. 1,3-Bis-(dimethylamino)-propan, 1,4-Bis-(dimethylamino)-butan oder N,N'-Dimethylpiperazin. Geeignete, jedoch weniger bevorzugte Neutralisationsamine sind aber auch gegenüber Isocyanaten reaktive Gruppen tragende tertiäre Amine, beispielsweise Alkanolamine, wie z.B. Dimethylethanolamin, Methyldiethanolamin oder Triethanolamin. Bevorzugt ist Dimethylcyclohexylamin.

Die Herstellung solcher modifizierten Polyisocyanate ist in WO-A 01-88006 im Detail beschrieben.

Grundsätzlich können in C) auch Polyisocyanate der vorstehend genannten Art mit blockierten NCO-Gruppen eingesetzt werden. Bevorzugt werden aber die vorstehend genannten Polyisocyanate eingesetzt, wobei auf eine Blockierung verzichtet wird.

Bevorzugte in C) eingesetzte Polyisocyanate sind die oben beschriebenen hydrophilierten Polyisocyanate.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, dass in den letztendlich erhaltenen erfindungsgemäßen Beschichtungsmitteln maximal 20 Gew.% Lösungsmittel, bezogen auf die Menge an Wasser vorliegt, wobei auch das gegebenenfalls in den Polymerisatdispersionen oder -lösungen noch vorliegende Lösungsmittel mit in die Berechnung eingeht. Als Zusatzmittel für die Polyisocyanate geeignete Lösungsmittel sind beispielsweise aromatische Kohlenwasserstoffe wie beispielsweise "Solventnaphtha" oder auch Lösungsmittel der bereits oben beispielhaft genannten Art.

Gegenstand der Erfindung ist auch ein Verfahren zur Herstellung eines solchen Lacks, bei dem in eine wässrige Lösung oder Dispersion der Komponenten A) und B) die Polyisocyanatkomponente C) emulgiert wird, wobei die Mengenverhältnisse der Komponenten A) bis C) so bemessen sind, dass sich ein NCO/OH-Äquivalentverhältnis von 0,5:1 bis 5:1, bevorzugt 0,8:1 bis 2:1 ergibt.

Vor der Zugabe der Polyisocyanatkomponente C) können der Polymerisatkomponente A), d.h. der Dispersion bzw. Lösung der Polymerisate die üblichen Hilfs- und Zusatzmittel der Lacktechnologie einverleibt werden. Hierzu gehören interne Trennmittel, Füllstoffe, Farbstoffe, Pigmente, Flammschutzmittel, Hydrolyseschutzmittel, Mikrobiozide, Verlaufshilfsmittel, Lösemittel, Antioxidantien, Entschäumungsmittel, Dispergierhilfsmittel für die Pigmentverteilung und dergleichen.

Die so erhaltenen erfindungsgemäßen Lacke eignen sich für praktisch alle Einsatzgebiete, in denen heute lösemittelhaltige, lösemittelfreie oder andersartige wässrige Anstrich- und Lacksysteme mit einem erhöhten Eigenschaftsprofil Verwendung finden, z.B.: Beschichtung praktisch aller mineralischer Baustoff-Oberflächen wie Kalk- und/oder Zementgebundene Putze, Gips enthaltende Oberflächen, Faser-Zement-Baustoffe,Beton; Lackierung und Versiegelung von Holz und Holzwerkstoffen wie Spanplatten, Holzfaserplatten sowie Papier; Lackierung metallischer Oberflächen; Lackierung asphalt- oder bitumenhaltiger Straßenbeläge; Lackierung und Versiegelung diverser Kunststoffoberflächen.

### Beispiele:

In den nachfolgenden Beispielen beziehen sich alle Prozentangaben auf Gewichtsprozente.

Die dynamischen Viskositäten wurden bei 23°C mit einem Rotationsviskosimeter (ViscoTester^{®} 550, Thermo Haake GmbH, D-76227 Karlsruhe) bestimmt.

Die OH-Zahl wurde bestimmt nach DIN 53240 T.2

Der Epoxidgruppengehalt wurde nach DIN 16945 bestimmt, wobei im Rahmen der vorliegenden Erfindung der Epoxidgruppengehalt auf eine molare Masse von 42 g/mol bezogen wurde.

Die Glanzmessung wurde nach DIN 67530 durchgeführt.

Haze wurde nach DIN 67530 bestimmt

Die Pendelhärte nach König wurde nach DIN 53157 nach 7-tägiger Lagerung bei Raumtemperatur bestimmt.

Die easy-to-clean Eigenschaften wurden so bestimmt, dass ein Lumocolor Permanent-Marker 350 (Staedler, Nürnberg, DE) in rot aufgetragen wurde für 1 Minute einwirken gelassen wurde. Anschließend wurde versucht, die Markierung mit einem trockenen und mit einem in Ethanol befeuchteten Zellstoffpapier zu entfernen.

### Edukte

MPA: Methoxypropylacetat
DBTL: Dibutylzinndilaurat
Surfynol 104 BC (50% in Butanglykol): 2,4,7,9-Tetramethyl-5-decyne-4,7-diol, Lanxess, Leverkusen, DE
Borchigel PW 25 (25% in Propanglykol/Wasser): nicht ionogenes Verdickungsmittel auf Polyurethanbasis, Bayer MaterialScience AG, Leverkusen, DE
Baysilone VP AI 3468 (10% in Butanglykol): Oberflächenadditiv Polyetherpolysiloxan, Borchers GmbH, Langenfeld DE
Solventnaphtha 100: aromatenhaltiges Lösemittel

### Herstellung Polyol I:

770 g eines Epoxids der Formel 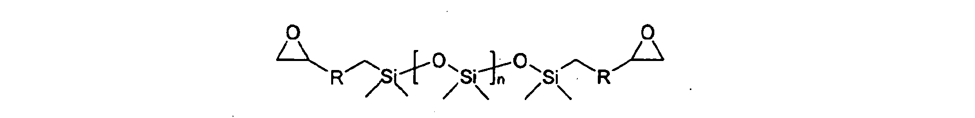 mit einem zahlenmittleren Molekulargewicht von 700 g/mol und R = CH₂ wurden vorgelegt und mit 231 g Diethanolamin versetzt. Diese Mischung wurde anschließend 2 Stunden bei 100 °C gerührt. Das Produkt war epoxygruppenfrei mit einer OH-Zahl von 370 mg KOH/g und einer Viskosität bei 23 °C von 2900 mPas.

### Vergleichspolyol I:

Zum Vergleich wurden Polyole der Formel 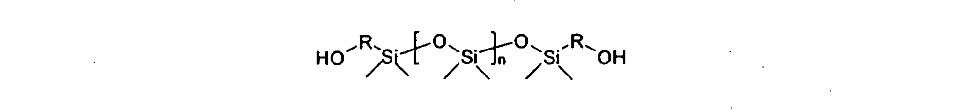 eingesetzt, wobei deren Eigenschaften in der nachstehenden Tabelle zusammengefasst sind:

| Vergleichspolyole | Baysilone OF/OH 502 6% | Baysilone OF/OH 502 3% | Wacker IM11 | Tegomer HSi 2311 |
|---|---|---|---|---|
| Hersteller | GE-Bayer-Silicones | GE-Bayer- | Wacker | Tego |
| | | Silicones | | |
| R = | CH₂ | CH₂ | CH₂CH(CH₃) | (CH₂)₃ |
| Viskosität 25°C (mPa.s) | 20 - 50 | 20 - 50 | 20 - 50 | 20 - 50 |
| OH-Zahl (mg KOH/g) | 198 | 99 | 96 | 36 |
| Molekulargewicht (g/mol) | 566 | 1133 | 1172 | 2946 |

**Polyol II:** wasserverdünnbare OH-funktionelle Polyacrylatdispersion,. 45 Gew.%ig in Wasser/Solventnaphtha 100/Dowanol PnB, neutralisiert mit Dimethylethanolamin/Triethanolamin, OH-Gehalt von 3,9 %, OH-Zahl 128 mg KOH/g und eine Viskosität von 2000 mPa.s; Bayhydrol XP 2470, Bayer Materialscience AG, Leverkusen, DE
**Polyisocyanat:** hydrophiles, aliphatisches Polyisocyanat auf Basis 1,6-Hexamethylendiisocyanat, mit einem NCO-Gehalt von 20,6 % und einer Viskosität bei 23 °C von 5400 mPa.s; Bayhydur XP 2487/1, Bayer Materialscience AG, Leverkusen, DE

### Lackherstellung

Die Komponenten wurden gemäß nachfolgender Tabelle mit handelsüblichen Lackadditiven, Katalysatoren und Polyisocyanaten unter Rühren versetzt, anschließend mit einem 50 µm Rakel auf Glas appliziert und 60 min bei 100°C ausgehärtet.

| **Beispiel** | **1** | **2** | **3** | **4** | **5** | **6** |
|---|---|---|---|---|---|---|
| Polyol I | 1,1 | | | | | |
| Wacker IM 11 | | | 1,1 | | | |
| Tegomer H-Si 2311 | | | | 1,1 | | |
| Baysilone OF/OH 3% | | | | | 1,1 | |
| Baysilone OF/OH 6% | | | | | | 1,1 |
| Polyol II | 45,5 | 47,8 | 45,4 | 45,4 | 45,4 | 45,4 |
| Surfynol 104 BC (50% in BG) | 1,3 | 1,3 | 1,3 | 1,3 | 1,3 | 1,1 |
| Borchigel PW 25 (25% PG/Wasser) | 0,2 | 0,2 | 0,2 | 0,2 | 0,2 | 1,3 |
| Baysilone VP AI 3468 (10% BG) | 1,1 | 1,1 | 1,1 | 1,1 | 1,1 | 0,2 |
| Polyisocyanat | 27,1 | 25,7 | 25,2 | 24,7 | 25,2 | 25,9 |
| Wasser | 31,8 | 31,8 | 31,8 | 31,8 | 31,8 | 1,1 |
| Pendelhärte 7 Tage RT (s) | 198 | 200 | 191 | 188 | 195 | 196 |
| Glanz 20 °C | 87 | 79 | 76 | 82 | 82 | 82 |
| Haze | 17 | 99 | 115 | 60 | 62 | 74 |
| Schleier auf Glasplatte | 0 | 0-1 | 3 | 3 | 2-3 | 1-2 |
| easy-to-clean | | | | | | |
| trocken | 1 | 3 | 2 | 2 | 2 | 2 |
| Ethanol | 1 | 1 | 1 | 2 | 1 | 2 |

| | | | | | | |
|---|---|---|---|---|---|---|
| 0 = gut, 5 = schlecht; Mengenangaben in Gramm | | | | | | |

Das erfindungsgemäße Beispiel 1 führt zu klaren Filmen mit einer glatter Oberfläche und guten easy-to-clean Eigenschaften. Beispiel 2 ohne Siliconkomponente liefert Filme mit stumpfer Oberfläche und im Vergleich zu Beispiel 1 schlechteren easy-to-clean Eigenschaften. Die Beispiele 3 bis 6 haben schlechtere easy-to-clean Eigenschaften als Beispiel 1. Außerdem haben die Filme aus Beispiel 3 und 4 eine ölige Oberfläche was darauf hinweist, dass das Silicondiol nicht in der Polyurethanmatrix eingebaut wurde. Vergleichsbeispiele 5 und 6 haben eine stumpfe Oberfläche.

## Patentansprüche

1. Wässrige Zusammensetzungen enthaltend
A) hydroxylgruppenhaltige Polydimethylsiloxane mit zahlenmittleren Molekulargewichten von 400 bis 3000 g/mol und einer mittleren OH-Funktionalität von ≥ 1,8, **dadurch gekennzeichnet, dass** diese wenigstens eine Struktureinheit der Formel (I) aufweisen: 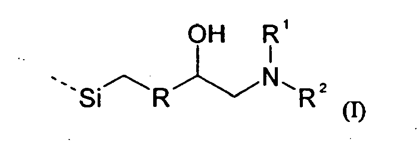 wobei
R ein aliphatischer gegebenenfalls verzweigter C₁- bis C₂₀-Rest ist,
R¹ ein gegebenenfalls verzweigter Hydroxyalkylrest mit 2 bis 10 Kohlenstoffatomen ist und
R² entweder Wasserstoff ist oder der Definition des Restes R¹ entspricht
und
B) hydroxylgruppen-, sowie sulfonat- und/oder carboxylatgruppenaufweisende Polymerisate mit einem zahlenmittleren Molekulargewicht Mₙ von 500 bis 50 000 g/mol, einer Hydroxylzahl von 16,5 bis 264 mg KOH/g Festharz, einer Säurezahl von. 0 bis 150 mg KOH/g Festharz und einem Gehalt an chemisch gebundenen Carboxylat- und/oder Sulfonatgruppen von 5 bis 417 Milliäquivalenten pro 100 g Feststoff des Polymerisats und
C) Polyisocyanate.

2. Wässrige Zusammensetzungen gemäß Anspruch 1, **dadurch gekennzeichnet, dass** die Komponenten A) und B) so eingesetzt, dass bezogen auf die Gesamtmenge von A) und B) 0,1 bis 10 Gew.% A) und 90 bis 99,90 Gew.% B) vorliegen.

3. Wässrige Zusammensetzungen gemäß Anspruch 1 oder 2, **dadurch gekennzeichnet, dass** das Verhältnis von NCO-Gruppen zu OH-funktionellen Verbindungen der Komponenten A) bis C) 0,8 : 1 bis 2 : 1 beträgt.

4. Zusammensetzungen gemäß einem der Ansprüche 1 bis 3, **dadurch gekennzeichnet, dass** die Reste R¹ und R² gleich sind und für HO-CH₂-CH₂- stehen.

5. Zusammensetzungen gemäß einem der Ansprüche 1 bis 4, **dadurch gekennzeichnet, dass** diese als Hilfs- und Zusatzstoffe interne Trennmittel, Füllstoffe, Farbstoffe, Pigmente, Flammschutzmittel, Hydrolyseschutzmittel, Mikrobiozide, Verlaufshilfsmittel, Lösemittel, Antioxidantien, Entschäumungsmittel und/oder Dispergierhilfsmittel für die Pigmentverteilung enthalten.

6. Beschichtungen, Verklebungen oder Dichtungsmassen erhältlich aus Zusammensetzungen gemäß einem der Ansprüche 1 bis 5.

7. Substrate beschichtet oder verklebt mit einer Beschichtung oder Verklebung gemäß Anspruch 6.

## Claims

1. Aqueous compositions comprising
A) hydroxyl-group-containing polydimethylsiloxanes having number-average molecular weights of from 400 to 3000 g/mol and a mean OH functionality of ≥ 1.8, **characterised in that** they contain at least one structural unit of formula (I): 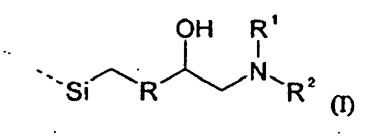 wherein
R is an aliphatic, optionally branched C₁ to C₂₀ radical,
R¹ is an optionally branched hydroxyalkyl radical having from 2 to 10 carbon atoms, and
R² is either hydrogen or corresponds to the definition of the radical R¹,
and
B) polymerisation products containing hydroxyl groups as well as sulfonate and/or carboxylate groups and having a number-average molecular weight Mₙ of from 500 to 50,000 g/mol, a hydroxyl number of from 16.5 to 264 mg KOH/g solid resin, an acid number of from 0 to 150 mg KOH/g solid resin and a content of chemically bonded carboxylate and/or sulfonate groups of from 5 to 417 milliequivalents per 100 g of solid of the polymerisation product, and
C) polyisocyanates.

2. Aqueous compositions according to claim 1, **characterised in that** components A) and B) are so used that from 0.1 to 10 wt.% of A) and from 90 to 99.90 wt.% of B) are present, based on the total amount of A) and B).

3. Aqueous compositions according to claim 1 or 2, **characterised in that** the ratio of NCO groups to OH-functional compounds of components A) to C) is from 0.8:1 to 2:1.

4. Compositions according to any one of claims 1 to 3, **characterised in that** the radicals R¹ and R² are the same and represent HO-CH₂-CH₂-.

5. Compositions according to any one of claims 1 to 4, **characterised in that** they comprise as auxiliary substances and additives internal parting agents, fillers, colourings, pigments, flameproofing agents, hydrolytic stabilisers, microbiocides, flow improvers, solvents, antioxidants, antifoams and/or dispersing aids for pigment distribution.

6. Coatings, bonds or sealing compositions obtainable from compositions according to any one of claims 1 to 5.

7. Substrates coated or bonded with a coating or bond according to claim 6.

## Revendications

1. Compositions aqueuses contenant :
A) des polydiméthylsiloxanes contenant des radicaux hydroxy, ayant un poids moléculaire moyen en nombre allant de 400 à 3000 g/mole et une fonctionnalité OH moyenne ≥ 1,8, **caractérisés en ce que** ceux-ci présentent au moins une unité structurale de formule (I) : 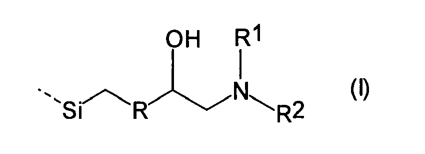 dans laquelle :
R est un reste aliphatique en C₁-C₂₀, le cas échéant ramifié,
R¹ est un reste hydroxyalcoyle le cas échéant ramifié, ayant 2 à 10 atomes de carbone, et
R² est l'atome d'hydrogène ou correspond à la définition du reste R¹, et
B) des polymères présentant des radicaux hydroxyle, ainsi que des radicaux sulfonate et/ou carboxylate avec un poids moléculaire moyen en nombre Mₙ allant de 500 à 50 000 g/mole, un indice hydroxyle allant de 16,5 à 264 mg KOH/g de résine solide, un indice d'acide allant de 0 à 150 mg KOH/g de résine solide et une teneur en radicaux carboxylate et/ou sulfonate liés chimiquement allant de 5 à 417 milliéquivalents par 100 g de matière solide du polymère, et
C) des polyisocyanates.

2. Compositions aqueuse selon la revendication 1, **caractérisées en ce que** les composants A) et B) sont mis en oeuvre de sorte que sur base de la quantité totale de A) et de B), il y a 0,1 à 10% en poids de A) et 90 à 99,90% en poids de B).

3. Compositions aqueuse selon la revendication 1 ou 2, **caractérisées en ce que** le rapport des radicaux NCO aux composés à fonction OH des composants A) à C) se situe dans l'intervalle allant de 0,8:1 à 2:1.

4. Compositions selon l'une des revendications 1 à 3, **caractérisées en ce que** les radicaux R¹ et R² sont identiques et représentent HO-CH₂-CH₂- .

5. Compositions selon l'une des revendications 1 à 4, **caractérisées en ce que** celles-ci contiennent comme additifs, des agents de démoulage internes, des charges, des colorants, des pigments, des agents de protection contre les flammes, des agents de protection contre l'hydrolyse, des microbicides, des auxiliaires d'écoulement, des solvants, des antioxydants, des agents anti-mousse et/ou des auxiliaires de dispersion pour la distribution du pigment.

6. Revêtements, encollages ou masses d'étanchéité obtenus à partir des compositions selon l'une des revendications 1 à 5.

7. Substrat revêtus ou encollé avec un revêtement ou un encollage selon la revendication 6.
